# EUROPEAN PATENT SPECIFICATION

(11) **EP 2 836 784 B1**
(45) Date of publication and mention of the grant of the patent: **17.07.2019**
(21) Application number: 13715213.8
(22) Date of filing: 09.04.2013
(51) Int. Cl.: F28F 21/02, F28D 20/02, C09K 5/06

(54) **METHOD OF PRODUCING A LATENT HEAT STORAGE DEVICE WITH PHASE CHANGE MATERIAL AND GRAPHITE MATRIX**
VERFAHREN ZUR HERSTELLUNG LATENTER WÄRMESPEICHER MIT SPEICHERSTOFF UND GRAPHITMATRIX
PROCÉDÉ DE PRODUCTION D'UN DISPOSITIF D'ACCUMULATION DE CHALEUR LATENTE À MATIÈRE À CHANGEMENT DE PHASE ET À MATRICE DE GRAPHITE

(30) Priority: 09.04.2012 US 201213442091
(43) Date of publication of application: 18.02.2015
(73) Proprietor: SGL Carbon SE, 65201 Wiesbaden (DE)
(72) Inventor: HUDLER, Bastian, 86405 Meitingen (DE); SCHMITT, Rainer, 86405 Meitingen (DE); FORD, Brian, Grayslake, Illinois 60030 (US); LANGER, Werner, 86405 Meitingen (DE); MECHEN, Sylvia, 86405 Meitingen (DE)
(86) International application number: PCT/EP2013/057396
(87) International publication number: WO 2013/153067

(56) References cited:
- US-A1- 2002 135 984
- US-A1- 2007 175 609
- US-A1- 2008 230 203
- US-A1- 2009 250 189

## Description

### BACKGROUND OF THE INVENTION

### Field of the Invention:

The invention relates method of producing a heat-conducting device, such as heat sinks and similar cooling structures.

Phase change materials (PCM) are capable of storing heat energy in the form of latent heat. The heat content is stored primarily by the conversion of the PCM from one phase to another. Most PCMs thereby change between a liquid phase and a solid phase. The heat transferred into or out of the PCM does not change its temperature; it is referred to as latent heat.

Phase change materials are being increasingly used in cooling systems for electronic devices. Within electronic applications, the cooling of devices is realized through to thin metal sheets, graphite foils or thermal conductive gels. Since the space in the application is typically very limited, it is necessary to provide the cooling by way of very thin materials. In order to combine a heat spreading or heat conducting material with some heat storage option, to protect the system against thermal runaway, a space efficient system needs to be developed.

Besides the need for electronic devices the same system may also be utilized as a type of activated cooling element for battery systems, where the heat storage materials are combined with other carbon and graphite materials as construction or heat dissipation material.

The additional materials or structures are primarily provided because the phase change materials typically have very low thermal conductivity. As such, it is technically difficult to conduct the heat into the PCM. Also, the PCM is not structurally rigid, at least in one of its useful phases. The characteristically low thermal conductivity of the PCMs may be overcome by providing additional highly conductive materials, such as carbon or graphite materials.

US 2002/0135984 A1 describes a laminar, thermally-conductive interface interposable intermediate a first heat transfer surface and an opposing second heat transfer surface to provide a thermally-conductive pathway therebetween. US 2009/0250189 A1 describes energy storage materials which may include a phase change material that includes a metal-containing compound. US 2008/0230203 A1 describes a latent heat storage material comprising at least two phase change materials and an expanded graphite material.

United States Patent Application Publication US 2007/0175609 A1 describes a vessel with bulk phase change material. A plurality of graphite foils extend into the bulk PCM in order to enable efficient heat flow into and out of the bulk PCM. That system is suitable to large-scale cooling systems, or heat exchange in general. It is not possible to miniaturize the device to such a degree as to render it suitable for electronic device cooling.

United States Patent No. US 7,235,301 B2 mixes graphite flakes into the bulk PCM in order to increase the heat conductivity of the material. The orientation of the graphite flakes may be aligned in a given direction, so as to define the best conductivity in the most useful direction of the final product.

Currently, latent heat storage devices based on the PCM/graphite composite principle are limited in their use since their thickness cannot yet be reduced below certain limits and the mechanical stability of the systems can only be assured with considerable difficulty.

### BRIEF SUMMARY OF THE INVENTION

It is an object to provide, in accordance with the invention, a method of producing a latent heat storage device as outlined herein. The method comprises:
placing one or more graphite blank in a reactor space, the graphite blank having a given density;
preheating the graphite blank to a temperature that lies above a melting temperature of the phase change material to be infiltrated; the preheating is effected in a vacuum furnace;
aspirating the phase change material (PCM) in the liquid phase into the reactor space and causing the phase change material (PCM) to infiltrate the graphite blank to form an infiltrated graphite body having a density exceeding the density of the graphite blank by at least 3:1; and
removing the infiltrated graphite body from the reactor space.

After the product has been removed from the reactor, a graphite cover foil is glued onto at least one surface of the infiltrated graphite body. This is best done after cooling and drying by spay adhesive.

The present invention thus provides a method of producing a latent heat storage device which comprises:
placing at least one graphite blank (1) in a reactor space, the graphite blank having a given density;
preheating the graphite blank (1) at a temperature above a melting temperature (Tm) of a phase change material (PCM) in a vacuum furnace;
feeding the phase change material (PCM) in a liquid phase into the reactor space and causing the phase change material (PCM) to infiltrate the graphite blank (1) to form an infiltrated graphite body having a density exceeding the density of the graphite blank by at least 3:1; and
removing the infiltrated graphite body from the reactor space.

The phase change material (PCM) may have a solid phase and the liquid phase, and the given melting temperature (Tm).

The method according to the invention may further comprise gluing a graphite cover foil onto at least one surface of the infiltrated graphite body.

The method according to the invention may further comprise placing a plurality of substantially flat plates of graphite blanks (1) in stratified order in the reactor space and infiltrating a plurality of graphite plates.

The terms "infiltration" and "impregnation" in the context of this description are quite synonymous. The term "infiltration" refers primarily to adhesive forces on a molecular and microscopic level. The graphite substrate has microscopic perforations - measured in a micrometer and sub-millimeter domain - and voids into which the liquid PCM is drawn (e.g., aspirated by a strong vacuum). The PCM, therefore, does not reside in bulk volume within the device.

Other features which are considered as characteristic for the invention are set forth in the appended claims.

Although the invention is illustrated and described herein as embodied in a method of producing a latent heat storage device with phase change material and graphite, it is nevertheless not intended to be limited to the details shown, since various modifications and structural changes may be made therein without departing from the scope and range of equivalents of the claims.

The construction of the invention, however, together with additional objects and advantages thereof will be best understood from the following description of the specific embodiment when read in connection with the accompanying drawings.

### BRIEF DESCRIPTION OF THE SEVERAL VIEWS OF THE DRAWING

Fig. 1 is a schematic partial section taken through a composite structure of a latent heat storage device obtainable according to the invention;
Fig. 2 is a diagrammatic view showing an impregnation tank with blanks and grid separators;
Fig. 3 is a table referencing several production examples of infiltrated graphite sheets,

### DETAILED DESCRIPTION OF THE INVENTION

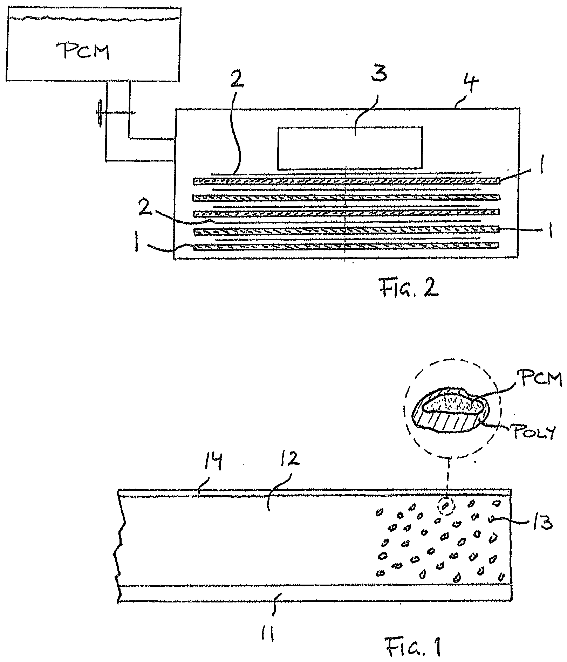

Referring now to the figures of the drawing in detail and first, particularly, to Fig. 1 thereof, there is seen a composite structure of a substrate 11 with a PCM coating 12. The substrate 11 is a thin copper foil (approx. 0.1 mm) and the PCM coating 12 is a compound formed of a carrier matrix with phase-change material micro capsules 13. The capsules 13 are formed by a polymer material that encapsulates an amount of PCM and they have a diameter of approx. 5 µm. As with most PCMs, the encapsulated material is a wax or paraffin-like material (e.g., C₂₂H₄₆). Such microcapsules are available from BASF, Germany, under the tradename Micronal®. The carrier matrix of the coating 12 is formed of a polymer (e.g., PVDF polyvinylidene fluoride), highly-expanded graphite, and a solvent.

A highly conductive cover layer is placed onto the coating 12. This provides for the efficient heat exchange with the PCM coating compound 12.

### Production Examples:

### Reference example 1 - PCM on Copper:

4 g of a 5% PVDF solution (vinylidene fluoride polymer) were mixed with 2.3 g of a mixture of Micronal® (PCM, melting temperature ∼ 25°C, BASF, Germany) and highly expanded graphite (GFG 5) at a ratio of 75% by weight to 25% by weight were mixed together with N-methyl-2-pyrrolidone (2.5 NMP, solvent). The stirring time for the solution was about 1 hour. The mixed solution was coated onto a Cu foil (0.1 mm thick) by means of a doctor blade, the coating thickness being about 250 µm. The coating was subsequently dried at 60°C.

Then, a high-density graphite foil was glued onto the coating, in order to thereby achieve the high thermal conductivity required of such devices. The thickness of the graphite foil was approx. 0.5 mm and its density was 18 g/cm³ (type L05518Z, SGL Carbon SE). The glue application onto the coating was effected by way of spray adhesive.

### Reference example 2 - PCM on/in Graphite:

First we produced a Tylose solution. Distilled water was introduced into a beaker, and 0.75% Tylose MHB 3000 was slowly interspersed with constant stirring. After a stirring time of about 30 minutes, the mixture was left to stand and swell, A batch of a polyvinyl alcohol (PVA) solution was then produced. To this end, distilled water was heated to about 80-90°C, and then 0.75% Mowiol 588 (PVA) was introduced with constant stirring in a laboratory mixer. After a stirring time of about 30 min, all of the PVA granules had dissolved.

In a next step, the carrier solution was produced from 0.75% Tylose solution and 0.75% PVA solution by mixing. The mixing ratio of the two solutions in this case was 1:1 .

A phase change material proportion was then introduced into the carrier solution. We once more used Micronal® (Tₘ = 25°C), here in a ratio 1.75:1 (carrier solution to Micronal®). The phase change material was introduced into the solution with the aid of a stirrer.

Then, the suspension was applied to a thin graphite foil (type F05007Z, SGL Carbon SE) by way of a screen printing process (about 50 g/m²). The graphite foil has a thickness of approx. 0.5 mm and a density of 0.7 g/cm³, that is, it is highly impregnable. Drying took place at room temperature. A high-density graphite foil (type L05518Z, SGL Carbon SE) was then glued onto the coating, by way of spray adhesive, in order to thereby achieve the high thermal conductivity required. The overall thickness of the sandwich was about 1 mm.

Detailed testing of these two types of devices provided promising results. First, we showed that it is possible, in principle, to produce very thin PCM components with a system thickness in the range of 1.0 mm. The exhibited storage capacities and the thermal conductivities attained with these very thin components were quite promising. Even though they did not yet reach the extreme demands listed above (e.g., capacity of 500 kJ/kg and conductivity of 500 W/mK), they are nevertheless suitable for many applications.

The test results of the two types of production samples showed that the storage capacity of the graphite-substrate system lies considerably higher, at about 85 J/g, than that of the copper-substrate system, which reached about 15 J/g. The capacity of the pure starting material PCM was about 110 J/g. It is presumed that the decrease in the storage capacity can be explained by the addition of the solvent, which dissolves the PCM capsules partially and thus negatively impacts the storage capacity of some of the material.

In order to prove the concept and to further improve devices of this kind, we followed further developments and we conducted further investigations:

### Example 3 - Impregnated Graphite;

Here, we were concerned with infiltration properties of certain materials. The development was not limited to the extremely thin dimensions of 1 mm, but blanks and the resultant product assemblies were allowed to have thicknesses between 2 and 10 mm. The base system was formed with substrate blanks with high absorption capacity for infiltration with phase change material (PCM) and proper adhesion of a high-density graphite cover foil.

The high-density cover foil may also be provided on both planar surfaces and, indeed, it may be used to encase or encapsulate the entire sandwich structure. The graphite plate or graphite sheet can thereby be formed with very large scale perforations in which the PCM may be infiltrated. In its liquid phase, the phase change material cannot escape from the porous graphite substrate because of the protection afforded by the cover foil.

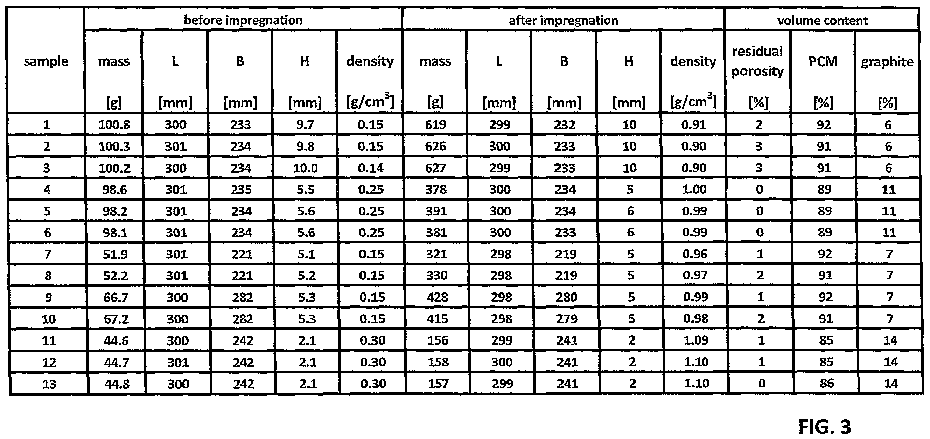

A variety of different graphite substrates were used for the production of the various samples, as listed in the table of Fig. 3 under "before impregnation." The graphite plates or sheets are formed of compressed, expanded graphite (EG). As can be seen, the mass ratio of infiltrate to graphite lies well above 3:1 and reaches close to 8:1 in several implementations.

The graphite plates had the general dimensions of 300 mm by 240 mm. The thicknesses varied from 2.0 mm to 10 mm. The densities were also varied between 0.15 and 0.30 g/cm³.

It will be understood that the graphite plates used in the context were/are plates of compressed, expanded graphite (EG).

While a variety of phase change materials (PCMs) are commercially available, we utilized a single source. Here we used a material PureTemp PT 37 manufactured by Entropy Solutions, Inc. of Plymouth, MN. The PCM has a melting temperature of ∼ 37°C and a density in its liquid phase of approximately 0.83 g/cm³. The storage capacity of the PCM was confirmed to be approximately ∼ 200 J/g.

With reference to Fig. 2, flat graphite blanks 1 were placed and stratified in a tank 4. The blanks 1 were weighted down with weights 3 in order to prevent the samples from floating. Grid separators 2 are indicated between the samples 1. Then, the samples were preheated at a temperature of 50°C for about 4 h in a vacuum furnace. Before the liquid PCM (temperature 50°C) could be aspirated in, the furnace had to be evacuated for about two hours (2 h). Then, wet vacuum was applied for a further two hours (2 h), followed by venting of the furnace. After a further 18 hours at standard pressure, it was possible to remove the samples from the bulk PCM.

Following the infiltration/impregnation, the top side or the bottom side of some of the blanks were provided with a high-density graphite foil (type L 029 18 Z, SGL Carbon SE) in order to thereby increase the thermal conductivity in the plane of the plate of the composite material system. The cover foil has a thickness of approx. 0.3 mm and a density of 18 g/cm³. The composite was glued together by way of spray adhesive.

The results of the infiltration were very encouraging. All blanks were surveyed geometrically and weighed before and after the infiltration in order to be able to determine the PCM uptake of the individual samples. The results are shown in the table of Fig. 3.

Of the numbered samples in Fig. 3, samples 3, 4, 7, 13 were each provided with a high-density covering layer.

The volume dimensions (length, width, height) of the starting carrier substrate (prior to infiltration) remain substantially unchanged during the infiltration. Here, a variant of a few percent (e.g., swelling, contraction, unidirectional shearing) is acceptable and lies well within the term "unchanged."

The infiltration of liquid phase change material is possible without any problems with the parameters used. Further, the production of the composites and the connection between high-density graphite foil and infiltrated blanks was likewise possible without any problems.

## Claims

1. A method of producing a latent heat storage device which comprises:
placing at least one graphite blank (1) in a reactor space, the graphite blank having a given density;
preheating the graphite blank (1) at a temperature above the melting temperature (Tm) of the phase change material (PCM) in a vacuum furnace;
feeding the phase change material (PCM) in a liquid phase into the reactor space and causing the phase change material (PCM) to infiltrate the graphite blank (1) to form an infiltrated graphite body having a density exceeding the density of the graphite blank by at least 3:1; and
removing the infiltrated graphite body from the reactor space.

2. The method according to claim 1, wherein the phase change material (PCM) has a solid phase and a liquid phase, and a given melting temperature (Tₘ).

3. The method according to claim 1, which further comprises gluing a graphite cover foil onto at least one surface of the infiltrated graphite body.

4. The method according to claim 1, which comprises placing a plurality of substantially flat plates of graphite blanks (1) in stratified order in the reactor space and infiltrating a plurality of graphite plates.

## Patentansprüche

1. Verfahren zum Herstellen einer Latentwärmespeichervorrichtung, Folgendes umfassend;
Anordnen von mindestens einem Graphitrohling (1) in einem Reaktorraum, wobei der Graphitrohling eine vorgegebene Dichte aufweist;
Vorwärmen des Graphitrohlings (1) auf eine Temperatur oberhalb der Schmelztemperatur (Tₘ) des Phasenwechselmaterials (PCM) in einem Vakuumofen;
Zuführen des Phasenwechselmaterials (PCM) in einer flüssigen Phase in den Reaktorraum und Bewirken, dass das Phasenwechselmaterial (PCM) in den Graphitrohling (1) eindringt, um einen infiltrierten Graphitkörper mit einer Dichte auszubilden, die die Dichte des Graphitrohlings um wenigstens 3:1 übersteigt; und Entfernen des infiltrierten Graphitkörpers aus dem Reaktorraum.

2. Verfahren nach Anspruch 1, wobei das Phasenwechselmaterial (PCM) eine feste Phase und eine flüssige Phase sowie eine vorgegebene Schmelztemperatur (Tₘ) aufweist.

3. Verfahren nach Anspruch 1, ferner umfassend das Aufkleben einer Graphitdeckfolie auf wenigstens eine Oberfläche des infiltrierten Graphitkörpers.

4. Verfahren nach Anspruch 1, umfassend das geschichtete Anordnen von mehreren im Wesentlichen flachen Platten aus Graphitrohlingen (1) in dem Reaktorraum sowie das Infiltrieren mehrerer Graphitplatten.

## Revendications

1. Procédé de fabrication d'un dispositif de stockage de chaleur latente, qui comprend les étapes suivantes :
placer au moins un flan de graphite (1) dans un espace de réaction, le flan de graphite ayant une densité donnée ;
préchauffer le flan de graphite (1) à une température supérieure à la température de fusion (Tm) du matériau à changement de phase (MCP) dans un four sous vide ;
introduire le matériau à changement de phase (MCP) dans une phase liquide dans l'espace de réaction pour provoquer l'infiltration du matériau à changement de phase (MCP) dans le flan de graphite (1) pour former un corps de graphite infiltré ayant une densité supérieure à la densité du flan de graphite d'au moins 3:1 ; et
retirer le corps de graphite infiltré de l'espace de réaction.

2. Procédé selon la revendication 1, dans lequel le matériau à changement de phase (MCP) a une phase solide et une phase liquide, et une température de fusion donnée (Tₘ).

3. Procédé selon la revendication 1, qui consiste en outre à coller une feuille de couverture en graphite sur au moins une surface du corps de graphite infiltré.

4. Procédé selon la revendication 1, qui consiste à placer plusieurs plaques sensiblement plates de flans en graphite (1) en couches stratifiées dans l'espace de réaction et à infiltrer ces plaques de graphite.
